# EUROPÄISCHE PATENTANMELDUNG

(11) **EP 4 645 676 A1**
(43) Veröffentlichungstag der Anmeldung: **05.11.2025**
(21) Anmeldenummer: 25169636.5
(22) Anmeldetag: 10.04.2025
(51) Int. Cl.: H02P 6/16, H02P 6/18, H02P 6/182, H02P 21/13, H02P 21/18, H02P 23/12

(54) **VERFAHREN ZUM BETREIBEN EINES BÜRSTENLOSEN GLEICHSTROMMOTORS, ANORDNUNG ZUR AUSFÜHRUNG DES VERFAHRENS SOWIE FAHRZEUG**

(30) Priorität: 30.04.2024 DE 102024112114
(71) Anmelder: Mahle International GmbH, 70376 Stuttgart (DE)
(72) Erfinder: Bonache, Jaime, 46980 Paterna (ES)

(57) **Zusammenfassung**

Die vorliegende Erfindung betrifft ein Verfahren zum Betreiben eines bürstenlosen Gleichstrommotors (2), insbesondere ein Antriebsmotor für ein E-Bike oder ein Pedelec, der einen Stator mit zumindest einer Statorwicklung und einen mit Permanentmagneten versehenen Rotor aufweist. Im Rahmen des Verfahrens ist vorgesehen, dass mittels einer Rotorlagegebereinrichtung (3) ein Winkellagesignal (6), das die Winkellage des Rotors bezogen auf den Stator repräsentiert, auf Basis einer ersten, sensorlos bereitgestellten Winkellageinformation (4) des Rotors und einer zweiten, sensorbasiert bereitgestellten Winkelgeschwindigkeitsinformation (5) des Rotors ermittelt wird. Die Erfindung betrifft weiterhin eine Anordnung (17), die zur Ausführung des vorgeschlagenen Verfahrens eingerichtet ist sowie ein vorteilhaftes Fahrzeug.

## Beschreibung

Die vorliegende Erfindung betrifft ein Verfahren zum Betreiben eines bürstenlosen Gleichstrommotors der einen Stator mit zumindest einer Statorwicklung und einen mit Permanentmagneten versehenen Rotor aufweist. Die Erfindung betrifft insbesondere eine Anordnung zur Ausführung des Verfahrens sowie ein Fahrzeug, das einen solchen bürstenlosen Gleichstrommotor und/oder eine solche Anordnung aufweist.

Bei den eingangs genannten Gleichstrommotoren erfolgt eine Kommutierung der Statorwicklungen des Stators, d.h. die Umschaltung der Bestromung zwischen den jeweiligen Statorwicklungen, elektronisch, d.h. bürstenlos. Um einen Gleichstrommotor optimal ansteuern zu können, d.h. dass ein möglichst vibrationsarmer, ruhiger und geräuscharmer Motorlauf gewährleistet ist, ist es erforderlich, die Drehgeschwindigkeiten des elektronisch erzeugten Drehfelds des Stators und des Rotors aufeinander abzustimmen. Hierzu muss die Lage des Rotors bezüglich des Stators bekannt sein.

Die Erfassung der Winkellage des Rotors bezüglich des Stators kann dabei entweder sensorbasiert oder sensorlos erfolgen. Bei einer sensorbasierten Erfassung der Winkellage des Rotors werden Sensoren im oder am Gleichstrommotor angeordnet, typischerweise Hall-Sensoren, die die Winkellage des Rotors direkt messen können. Bei einer sensorlosen Erfassung nutzt man vorzugsweise durch die Drehung des Rotors in den Statorwicklungen des Stators erzeugte, rückinduzierte Spannungen bzw. Gegenkräfte aus, um die Winkellage des Rotors zu bestimmen, was in den beteiligten Fachkreisen als BEMF-Messung (aus dem englischen Back Electromotive Force) bekannt ist.

Aus der Schrift US 6,984,954 B2 ist ein Verfahren zum Betreiben eines bürstenlosen Gleichstrommotors gemäß der eingangsgenannten Art bekannt, bei dem eine solche sensorbasierte als auch eine solche sensorlose Erfassung der Winkellage des Rotors zur Ansteuerung des Gleichstrommotors genutzt wird.

Dabei wird bei relativ niedrigen Drehzahlen des Gleichstrommotors die Erfassung der Winkellage des Rotors bevorzugt sensorbasiert durchgeführt, da damit die Winkellage des Rotors relativ genau ermittelbar ist. Bei relativ hohen Drehzahlen des Gleichstrommotors kann die Erfassung der Winkellage mittels Sensoren jedoch derart ungenau werden, dass eine sinnvolle Ansteuerung des Gleichstrommotors nicht mehr möglich ist. Daher wird bei relativ hohen Drehzahlen des Gleichstrommotors auf die sensorlose Erfassung der Winkellage des Rotors zurückgegriffen, die auch bei relativ hohen Drehzahlen des Gleichstrommotors relativ gute Schätzwerte für die Winkellage des Rotors bereitstellen kann. Mit anderen Worten muss zwischen einer sensorbasierten Erfassung und einer sensorlosen Erfassung in Abhängigkeit der Drehzahl des Gleichstrommotors umgeschaltet werden. Es hat sich herausgestellt, dass die sensorbasierte als auch die sensorlose Erfassung der Winkellage des Rotors bei unerwünschten Einflüssen auf den Gleichstrommotor, insbesondere schnelle Lastwechselsituationen bei Ebike-Anwendung, eine Blockierung des Gleichstrommotors oder äußere elektromagnetische Emissionen, ungenau arbeitet. Dies betrifft insbesondere eine sensorlose Winkelerfassung.

Die Aufgabe der Erfindung liegt daher darin, eine verbesserte oder zumindest eine andere Ausführungsform für ein Verfahren zum Betreiben eines bürstenlosen Gleichstrommotors anzugeben. Weiterhin soll eine Anordnung zur Ausführung des Verfahrens sowie ein vorteilhaftes Fahrzeug bereitgestellt werden.

Bei der vorliegenden Erfindung wird diese Aufgabe durch die Gegenstände der unabhängigen Ansprüche gelöst. Vorteilhafte Ausführungsformen sind Gegenstand der abhängigen Ansprüche, der Beschreibung sowie der Zeichnungen.

Die Erfindung hat erkannt, dass die Erfassung der Winkellage des Rotors gegenüber unerwünschten Einflüssen robuster gemacht werden kann, indem die sensorbasierte Erfassung der Winkellage und die sensorlose Erfassung der Winkellage kombiniert werden.

Vor dem Hintergrund dieser Überlegung schlägt die Erfindung ein Verfahren zum Betreiben eines bürstenlosen Gleichstrommotors, insbesondere ein Antriebsmotor für ein E-Bike oder ein Pedelec, vor, der einen Stator mit zumindest einer Statorwicklung und einen mit Permanentmagneten versehenen Rotor aufweist. Im Rahmen des Verfahrens ist vorgesehen, dass mittels einer Rotorlagegebereinrichtung ein Winkellagesignal, das die Winkellage des Rotors bezogen auf den Stator repräsentiert, auf Basis einer ersten, sensorlos bereitgestellten Winkellageinformation des Rotors und einer zweiten, sensorbasiert bereitgestellten Winkelgeschwindigkeitsinformation des Rotors (insb. definiert als Winkeländerung oder Winkelvorschub pro Umdrehung des verwendeten Sensors) ermittelt wird. Dadurch wird das zur Bestromung der zumindest einen Statorwicklung notwendige Winkellagesignal des Rotors aus einer sensorlos erfassten Winkellageinformation des Rotors und einer sensorbasiert erfassten Winkelgeschwindigkeitsinformation des Rotors generiert. Mit anderen Worten werden sensorlose Winkellageinformation des Rotors und sensorbasierte Winkelgeschwindigkeitsinformation des Rotors verwendet, um ein Winkellagesignal des Rotors bereitzustellen. Durch die Kombination, insbesondere die Verbesserung, von sensorlosen Winkellageinformation des Rotors mit sensorbasierten Winkelgeschwindigkeitsinformation des Rotors ist ein hybrider Ansatz zur Winkelermittlung realisiert. Das vorgeschlagene Verfahren bietet den Vorteil, dass die Erfassung der Winkellage des Rotors, d.h. die bereitgestellten Winkellagesignale des Rotors, relativ genau und insbesondere gegenüber Störeinflüssen, wie beispielsweise schnelle Lastwechselsituationen bei Ebike-Anwendung, eine Blockierung des Gleichstrommotors oder äußere elektromagnetische Emissionen, robust sind.

Zweckmäßigerweise kann vorgesehen sein, dass die Ermittlung des Winkellagesignals des Rotors unabhängig von einer Drehzahl des Rotors erfolgt. Mit anderen Worten werden über einen Gesamtdrehzahlbereich des Gleichstrommotors hinweg sowohl die sensorlos erfassten Winkellageinformationen des Rotors als auch die sensorbasiert erfassten Winkelgeschwindigkeitsinformationen des Rotors verwendet, um die Winkellage des Rotors zu ermitteln. Damit kann der Gleichstrommotor bei relativ niedrigen Drehzahlen als auch bei relativ hohen Drehzahlen eine relativ genau und robust betrieben werden.

Weiterhin kann vorgesehen sein, dass im Rahmen des vorgeschlagenen Verfahrens ein mittels der Rotorlagegebereinrichtung ermitteltes Winkellagesignal an eine mit der Rotorlagegebereinrichtung kommunizierend verbundene Steuereinrichtung des Gleichstrommotors bereitgestellt und von der Steuereinrichtung zur Ansteuerung des Gleichstrommotors verwendet wird. Dabei ist die Steuereinrichtung eingerichtet, die Ansteuerung des Gleichstrommotors, d.h. die Kommutierung der zumindest einen Statorwicklung des Stators, entsprechend dem Winkellagesignal durchzuführen. Damit kann der bürstenlose Gleichstrommotor auch bei Lastwechseln oder dergleichen ungewollten Störeinflüsse relativ vibrationsarm, ruhig und geräuscharm betrieben werden. Dabei kann die Rotorlagegebereinrichtung in den Gleichstrommotor oder der Steuereinrichtung des Gleichstrommotors integriert sein.

Die Steuereinrichtung ist zweckmäßigerweise mit einer Stromversorgung verbunden. Weiterhin kann die Steuereinrichtung einen Wechselrichter zum Umwandeln einer von der Stromversorgung gelieferten Wechselspannung in eine Gleichspannung aufweisen. Es ist auch vorstellbar, dass die Steuereinrichtung eine Steuereinheit, insbesondere einen Mikrocontroller, aufweist, der zur Ansteuerung des Gleichstrommotors entsprechend dem Winkellagesignal eingerichtet ist.

Weiterhin kann vorgesehen sein, dass die Rotorlagegebereinrichtung einen Lageestimator, insbesondere einen modifizierten Luenberger-Beobachter, zum Ermitteln eines Winkellagenzwischensignals aufweist. Im Rahmen des vorgeschlagenen Verfahrens ist vorgesehen, dass zur Ermittlung des Winkellagesignals des Rotors, insbesondere ausschließlich, die erste, sensorlos bereitgestellte Winkellageinformation des Rotors und die zweite, sensorbasiert bereitgestellte Winkelgeschwindigkeitsinformation des Rotors als Lageestimator-Eingangssignale an dem Lageestimator bereitgestellt werden. Dabei werden die erste, sensorlos bereitgestellte Winkellageinformation des Rotors als erstes Lageestimator-Eingangssignal und die zweite, sensorbasiert bereitgestellte Winkelgeschwindigkeitsinformation des Rotors als zweites Lageestimator-Eingangssignal bezeichnet. Weiterhin ist vorgesehen, dass der Lageestimator im Rahmen des vorgeschlagenen Verfahrens ein Winkellagenzwischensignal, insbesondere ausschließlich, auf Basis der ersten, sensorlos bereitgestellten Winkellageinformation des Rotors und der zweiten, sensorbasiert bereitgestellten Winkelgeschwindigkeitsinformation des Rotors, d.h. insbesondere ausschließlich auf Basis der bereitgestellten Lageestimator-Eingangssignale, ein Winkellagesignal des Rotors ermittelt, wobei der Lageestimator das ermittelte Winkellagenzwischensignal als Lageestimator-Ausgangssignal bereitstellt. Damit ist ein Lageestimator- bzw. -schätzer, insbesondere ein modifizierter Luenberger-Beobachter, bereitgestellt, der als Eingangssignale, insbesondere ausschließlich, sensorlos bereitgestellte Winkellageinformationen des Rotors und sensorbasiert bereitgestellte Winkelgeschwindigkeitsinformationen des Rotors, insbesondere ein Drehgeschwindigkeits-Signal des Rotors, erhält. Im Unterschied dazu werden bei einem klassischen Luenberger-Beobachter als Eingangssignale sensorlos bereitgestellte Winkellageinformationen des Rotors im aktuellen und vorherigen Umdrehung einerseits sowie ein durch den Luenberger-Beobachter generierter Lageschätzwert, d.h. ein Ausgangssignal des Luenberger-Beobachters, aber nicht sensorbasiert bereitgestellte Winkellageinformationen des Rotors genutzt. Dadurch kann die Robustheit des vorgeschlagenen Verfahrens verbessert werden.

Als Lageestimator oder Luenberger-Beobachter oder jeder andere Typ von Beobachter wird hierin zweckmäßigerweise eine regelungstechnische Einrichtung verstanden, die mittels von bereitgestellten Eingangssignalen (hier die Lageestimator-Eingangssignale) und beispielsweise unter Zuhilfenahme eines Reglers und/oder einem Modell eines zu überwachenden Systems (hier der Rotor des Gleichstrommotors) nicht direkt messbare Informationen (hier das Winkellagesignal des Rotors) des Systems abschätzt.

Insbesondere kann vorgesehen sein, dass die Rotorlagegebereinrichtung einen dem Lageestimator nachgeschalteten Regelkreis aufweist, wobei im Rahmen des vorgeschlagenen Verfahrens das mittels des Lageestimators ermittelte Winkellagenzwischensignal des Rotors, d.h. das Lageestimator-Ausgangssignal, als Regelkreis-Eingangssignal an einem Regler des Regelkreises, insbesondere eine Phasenregelschleife (PLL, aus dem englischen phase-locked loop), bereitgestellt wird. Dabei wird der Regler auf Basis des bereitgestellten Regelkreis-Eingangssignals und einem auf den Regler zurückgeführten Rückführsignal, das von einem korrigierten, vorhergehenden Winkellagesignal des Reglers und der zweiten, sensorbasiert bereitgestellten Winkelgeschwindigkeitsinformation des Rotors gebildet wird, betrieben. Es ist vorgesehen, dass der Regler als Regelkreis-Ausgangssignal ein korrigiertes Winkellagesignal des Rotors bereitstellt. Damit wird die mittels des Lageestimators bereitgestellte Winkellage des Rotors korrigiert.

Dabei kann vorgesehen sein, dass die Rotorlagegebereinrichtung einen Summierer aufweist, wobei das besagte Regelkreis-Ausgangssignal und die zweite, sensorbasiert bereitgestellte Winkelgeschwindigkeitsinformation des Rotors (insb. definiert als Winkeländerung oder Winkelvorschub pro Umdrehung des verwendeten Sensors) an dem Summierer bereitgestellt werden. Weiterhin ist vorgesehen, dass der Summierer das Regelkreis-Ausgangssignal und die zweite, sensorbasiert bereitgestellte Winkelgeschwindigkeitsinformation des Rotors summiert und als Rotorlagegebereinrichtung-Ausgangssignal ein Winkellagesignal des Rotors bereitstellt. Mit anderen Worten wird das Regelkreis-Ausgangssignal anhand eines Winkelvorlaufs (Winkellageinformation des Rotors) verbessert, wodurch die Robustheit des vorgeschlagenen Verfahrens weiter erhöht werden kann.

Weiterhin kann vorgesehen sein, dass die erste, sensorlos bereitgestellte Winkellageinformation des Rotors von einem Spannungs-Signal der zumindest einen Statorwicklung und/oder einem Stromsignal der zumindest einen Statorwicklung gebildet wird oder ein Spannungs-Signal der zumindest einen Statorwicklung und/oder ein Stromsignal der zumindest einen Statorwicklung aufweist. Dabei kann das Spannungs-Signal der zumindest einen Statorwicklung eine durch die Permanentmagneten des Rotors in der zumindest einen Statorwicklung induzierte, messbare Spannung in Volt [V] und/oder das Stromsignal einen in der mindestens einen Statorwicklung messbaren Strom in Ampere [A] repräsentieren. Zusätzlich kann ein einphasiges reduziertes Motormodell zur Berechnung verwendet werden, mit vorher bekannten Daten, z.B. wie Statorwiderstand in Volt pro Ampere [V/A] und/oder Induktivität in Volt-Sekunden pro Ampere [Vs/A], und auch eine Bemf-Konstante, die eine Bemf-Spannung in Volt [V] mit der (tatsächlichen) Drehzahl, z.B. in Umdrehungen pro Minute [U/min], in Beziehung setzt.

Zweckmäßigerweise kann vorgesehen sein, dass die zweite, sensorbasiert bereitgestellte Winkelgeschwindigkeitsinformation des Rotors von zumindest einem Drehgeschwindigkeits-Signal des Rotors gebildet wird oder zumindest ein Drehgeschwindigkeits-Signal des Rotors aufweist. Dabei kann das Drehgeschwindigkeits-Signal eine Drehgeschwindigkeit des Rotors, d.h. eine Winkellageänderung des Rotors pro Zeiteinheit, repräsentieren. Insbesondere wird diese Geschwindigkeit als Winkelvorschub pro Umdrehung angegeben, sodass sie direkt addiert werden kann.

Ferner kann vorgesehen sein, dass die Rotorlagegebereinrichtung zumindest einen, in oder am Gleichstrommotor angeordneten Sensor zum Erfassen der Drehgeschwindigkeit des Rotors besitzt oder mit zumindest einem Sensor zum Erfassen der Drehgeschwindigkeit des Rotors kommunizierend verbunden ist, der zumindest eine Sensor ein die Drehgeschwindigkeit des Rotors repräsentierendes Drehgeschwindigkeits-Signal an der Rotorlagegebereinrichtung bereitstellt, das die zweite, sensorbasiert bereitgestellte Winkelgeschwindigkeitsinformation des Rotors bildet. Dabei kann der zumindest eine Sensor der Rotorlagegebereinrichtung von zumindest einem Positionssensor, insbesondere einem high-resolution Positionssensor und/oder zumindest einem Hallsensor und/der zumindest einem optischen Sensor realisiert sein.

Gemäß einem weiteren Grundgedanken der Erfindung ist eine Anordnung zur Ausführung des vorstehend beschriebenen Verfahrens vorgesehen. Die Anordnung zeichnet sich aus durch einen bürstenlosen Gleichstrommotor, insbesondere ein Antriebsmotor für ein E-Bike oder ein Pedelec, der einen Stator mit zumindest einer Statorwicklung und einen mit Permanentmagneten versehenen Rotor aufweist. Die Anordnung weist weiterhin eine Steuereinrichtung zur Ansteuerung des Gleichstrommotors sowie eine mit der Steuereinrichtung kommunizierend verbundene Rotorlagegebereinrichtung auf. Die Steuereinrichtung ist zweckmäßigerweise mit einer Stromversorgung verbunden. Weiterhin kann die Steuereinrichtung einen Wechselrichter zum Umwandeln einer von der Stromversorgung gelieferten Wechselspannung in eine Gleichspannung aufweisen. Es ist auch vorstellbar, dass die Steuereinrichtung eine Steuereinheit, insbesondere einen Mikrocontroller, aufweist, der zur Ansteuerung des Gleichstrommotors entsprechend dem Winkellagesignal eingerichtet ist. Die Rotorlagegebereinrichtung kann zur Ausführung des vorstehend beschriebenen Verfahrens eingerichtet sein und/oder einen Lageestimator, insbesondere einen modifizierten Luenberger-Beobachter, zum Ermitteln eines Winkellagezwischensignals des Rotors, einen dem Lageestimator nachgeschalteten Regelkreis mit einem Regler, insbesondere eine Phasenregelschleife (PLL, aus dem englischen phase-locked loop), einen dem Regelkreis nachgeschalteten oder in den Regelkreis integrierten Summierer sowie zumindest einen, in oder am Gleichstrommotor angeordneten Sensor zum Erfassen der Drehgeschwindigkeit des Rotors aufweisen.

Gemäß einem weiteren Grundgedanken der Erfindung ist ein Fahrzeug, insbesondere ein E-Bike oder ein Pedelec, vorgesehen, das zur Ausführung des vorstehend beschriebenen Verfahrens eingerichtet ist und/oder eine Anordnung zur Ausführung des vorstehend beschriebenen Verfahrens aufweist. Dadurch ist ein vorteilhaftes Fahrzeug, insbesondere ein E-Bike oder ein Pedelec, angegeben, dessen Antriebsmotor auch bei Lastwechseln oder dergleichen ungünstigen äußeren Belastungen relativ vibrationsarm, ruhig und geräuscharm betriebbar ist.

Zusammenfassend bleibt festzuhalten: Die vorliegende Erfindung betrifft vorzugsweise ein Verfahren zum Betreiben eines bürstenlosen Gleichstrommotors, insbesondere ein Antriebsmotor für ein E-Bike oder ein Pedelec, der einen Stator mit zumindest einer Statorwicklung und einen mit Permanentmagneten versehenen Rotor aufweist. Im Rahmen des Verfahrens ist vorgesehen, dass mittels einer Rotorlagegebereinrichtung eine Winkellage des Rotors bezogen auf den Stator auf Basis einer ersten, sensorlos bereitgestellten Winkellageinformation des Rotors und einer zweiten, sensorbasiert bereitgestellten Winkelgeschwindigkeitsinformation des Rotors ermittelt wird, wobei die ermittelte Winkellage des Rotors als Winkellagesignal bereitgestellt wird. Die Erfindung betrifft weiterhin eine Anordnung, die zur Ausführung des vorgeschlagenen Verfahrens eingerichtet ist sowie ein vorteilhaftes Fahrzeug.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsformen der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch
- Fig. 1: eine schematische Anordnung zur Ausführung des erfindungsgemäßen Verfahrens,
- Fig. 2: eine schematische Rotorlagegebereinrichtung zur Ausführung des erfindungsgemäßen Verfahrens.

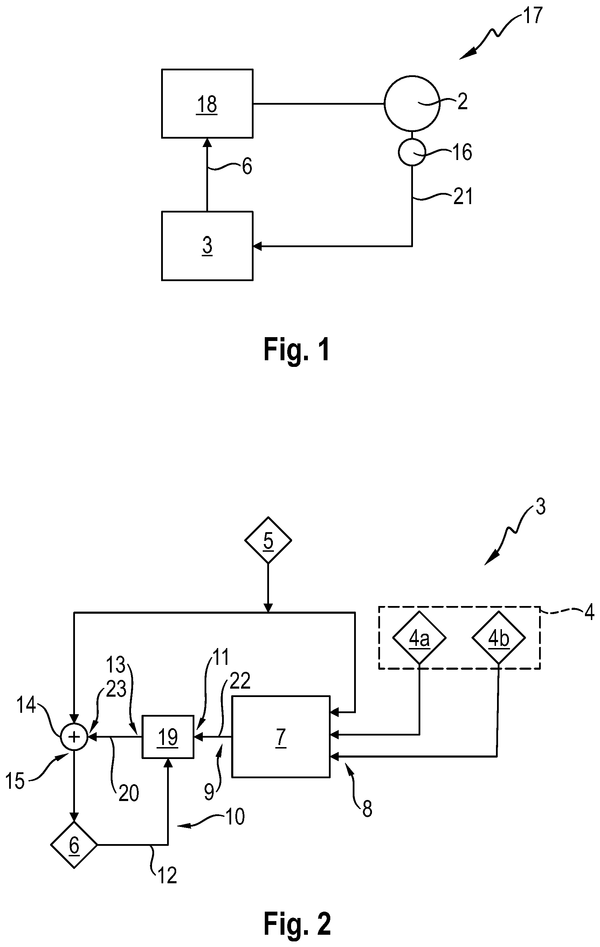

Die Fig. 1 zeigt eine schematische, im Gesamten mit 17 bezeichnete Anordnung zur Ausführung des erfindungsgemäßen Verfahrens. Die Anordnung 17 weist einen durch einen Kreis symbolisierten, bürstenlosen Gleichstrommotor 2 auf, der einen nicht illustrierten Stator mit zumindest einer Statorwicklung und einen ebenfalls nicht illustrierten Rotor mit Permanentmagneten aufweist.

Der Gleichstrommotor 2 wird elektronisch angesteuert (kommutiert), wozu die Anordnung 17 mit einer mit dem Gleichstrommotor 2 kommunizierend verbundenen Steuereinrichtung 18 zur Ansteuerung des Gleichstrommotors 2 ausgerüstet ist. Die Steuereinrichtung 18 ist exemplarisch mit einer nicht gezeigten Stromversorgung verbunden und besitzt beispielsweise einen nicht illustrierten Wechselrichter zum Umwandeln einer von der Stromversorgung gelieferten Wechselspannung in eine Gleichspannung und/oder eine ebenfalls nicht illustrierte Steuereinheit zur Ansteuerung des Gleichstrommotors 2.

Die Anordnung 17 besitzt außerdem eine mit der Steuereinrichtung 18 kommunizierend verbundene, in Fig. 1 durch ein einfaches Kästchen repräsentierte Rotorlagegebereinrichtung 3, die zur Ausführung des erfindungsgemäßen Verfahrens eingerichtet ist.

Die Fig. 2 zeigt eine stark vereinfachte, schematische Ansicht der besagten Rotorlagegebereinrichtung 3. Die Rotorlagegebereinrichtung 3 weist einen Lageestimator 7, einen dem Lageestimator 7 nachgeschalteten Regelkreis 10 mit einem Regler 19, einen dem Regelkreis 10 nachgeschalteten oder in den Regelkreis 10 integrierten Summierer 14 sowie zumindest einen am Gleichstrommotor 2 angeordneten, mit der Rotorlagegebereinrichtung 3 kommunizierend verbundenen Sensor 16 zum Erfassen einer Drehgeschwindigkeit des Rotors des Gleichstrommotors 2 auf.

Damit der Gleichstrommotor 2 auch bei unerwünschten äußeren Einflüssen, insbesondere Lastwechselsituationen, Blockierungen des Gleichstrommotors 2 oder äußere elektromagnetische Emissionen, möglichst vibrationsarm und geräuscharm betrieben werden kann, soll die Winkellage des Rotors bezüglich des Stators ermittelt und an der Steuereinrichtung 18 bereitgestellt werden, sodass diese eine optimale Ansteuerung des Gleichstrommotors 2 vornehmen kann.

Hierzu wird vorgeschlagen, dass mittels der Rotorlagegebereinrichtung 3 ein insbesondere in eine oder mehrere Phasen Auslöseimpulse zerlegtes Winkellagesignal 6 des Rotors, das die Winkellage des Rotors bezogen auf den Stator repräsentiert, unabhängig von einer Drehzahl des Rotors und auf Basis einer ersten, sensorlos bereitgestellten Winkellageinformation 4 des Rotors und einer zweiten, sensorbasiert bereitgestellten Winkelgeschwindigkeitsinformation 5 des Rotors ermittelt wird.

Dabei ist vorliegend die erste, sensorlos bereitgestellte Winkellageinformation 4 von einem Spannungs-Signal 4a in Volt [V] der zumindest einen Statorwicklung des Gleichstrommotors 2 und/oder von einem Stromsignal 4b in Ampere [A] der zumindest einen Statorwicklung gebildet. Mit anderen Worten repräsentiert die erste Winkellageinformation 4 Signale des Gleichstrommotors 2, die sensorlos und beispielsweise mittels einer BEMF-Messung am Gleichstrommotor 2 erfasst werden. Die zweite, sensorbasiert bereitgestellte Winkelgeschwindigkeitsinformation 5 des Rotors wird vorliegend von einem Drehgeschwindigkeits-Signal 21 gebildet, das mittels des zumindest einen Sensors 16 von dem sich drehenden Rotor erfasst wird.

Weiterhin ist vorgesehen, dass das mittels der Rotorlagegebereinrichtung 3 ermittelte Winkellagesignal 6 an der Steuereinrichtung 18 bereitgestellt und von der Steuereinrichtung 18 zur optimalen Ansteuerung des Gleichstrommotors 2 verwendet wird.

In Fig. 2 ist weiterhin zu erkennen, dass zur Ermittlung des Winkellagesignals 6 des Rotors mittels der Rotorlagegebereinrichtung 3 ausschließlich die erste, sensorlos bereitgestellte Winkellageinformation 4 des Rotors und die zweite, sensorbasiert bereitgestellte Winkellgeschwindigkeitsinformation 5 des Rotors als Lageestimator-Eingangssignale 8 an dem Lageestimator 7 bereitgestellt werden, wobei dieser auf Basis der Lageestimator-Eingangssignale 8 ein Zwischenwinkelsignal 22 ermittelt. Dabei stellt der Lageestimator 7 an seinem Ausgang das ermittelte Winkellagenzwischensignal 22 als Lageestimator-Ausgangssignal 9 bereit. Anschließend wird das vom Lageestimator 7 bereitgestellte Lageestimator-Ausgangssignal 9 als Regelkreis-Eingangssignal 11 an dem Regler 19 des Regelkreises 10 bereitgestellt. Weiterhin wird der Regler 19 auf Basis des bereitgestellten Regelkreis-Eingangssignals 11 und einem auf den Regler 19 zurückgeführten Rückführsignal 12, das von einem vorhergehenden, korrigierten Winkellagesignal 20 des Reglers 19 und der zweiten, sensorbasiert bereitgestellten Winkelgeschwindigkeitsinformation 5 des Rotors gebildet wird, betrieben. Dabei stellt der Regler 19 bzw. der Regelkreis 10 ausgangsseitig als Regelkreis-Ausgangssignal 13 ein korrigiertes Winkellagesignal 20 bereit. Weiterhin ist vorgesehen, dass das Regelkreis-Ausgangssignal 13 als Summierer-Eingangssignal 23 und die zweite, sensorbasiert bereitgestellte Winkelgeschwindigkeitsinformation 5 des Rotors an dem Summierer 14 bereitgestellt werden, wobei der Summierer 14 das Regelkreis-Ausgangssignal 13 und die zweite, sensorbasiert bereitgestellte Winkelgeschwindigkeitsinformation 5 summiert. Anschließend wird am Summierer 14 als Rotorlagegebereinrichtung-Ausgangssignal 15 ein ermitteltes Winkellagesignal 6 des Rotors bereitstellt, das wie oben beschrieben an der Steuereinrichtung 18 bereitgestellt und von dieser zur optimalen Ansteuerung des Gleichstrommotors 2 verwendet werden kann.

## Patentansprüche

1. Verfahren zum Betreiben eines bürstenlosen Gleichstrommotors (2), insbesondere ein Antriebsmotor für ein E-Bike oder ein Pedelec, der einen Stator mit zumindest einer Statorwicklung und einen mit Permanentmagneten versehenen Rotor aufweist, **dadurch gekennzeichnet, dass**
- mittels einer Rotorlagegebereinrichtung (3) ein Winkellagesignal (6), das die Winkellage des Rotors bezogen auf den Stator repräsentiert, auf Basis einer ersten, sensorlos bereitgestellten Winkellageinformation (4) des Rotors und einer zweiten, sensorbasiert bereitgestellten Winkelgeschwindigkeitsinformation (5) des Rotors ermittelt wird.

2. Verfahren nach Anspruch 1,
**dadurch gekennzeichnet, dass**
- die Ermittlung des Winkellagesignals (6) des Rotors unabhängig von einer Drehzahl des Rotors erfolgt.

3. Verfahren nach Anspruch 1 oder 2,
**dadurch gekennzeichnet, dass**
- das mittels der Rotorlagegebereinrichtung (3) ermittelte Winkellagesignal (6) an eine mit der Rotorlagegebereinrichtung (3) kommunizierend verbundene Steuereinrichtung (18) des Gleichstrommotors (2) bereitgestellt und von der Steuereinrichtung (18) zur Ansteuerung des Gleichstrommotors (2) verwendet wird.

4. Verfahren nach einem der vorhergehenden Ansprüche,
**dadurch gekennzeichnet, dass**
- die Rotorlagegebereinrichtung (3) einen Lageestimator (7) zum Ermitteln eines Winkellagenzwischensignals (22), insbesondere einen modifizierten Luenberger-Beobachter, aufweist,
- zur Ermittlung eines Winkellagesignals (6) des Rotors, insbesondere ausschließlich, die erste, sensorlos bereitgestellte Winkellageinformation (4) des Rotors und die zweite, sensorbasiert bereitgestellte Winkelgeschwindigkeitsinformation (5) des Rotors als Lageestimator-Eingangssignale (8) an dem Lageestimator (7) bereitgestellt werden,
- der Lageestimator (7) auf Basis der Lageestimator-Eingangssignale (8) ein Winkellagenzwischensignal (22) ermittelt, das als Lageestimator-Ausgangssignal (9) bereitstellt wird.

5. Verfahren nach Anspruch 4,
**dadurch gekennzeichnet, dass**
- die Rotorlagegebereinrichtung (3) einen dem Lageestimator (7) nachgeschalteten Regelkreis (10) aufweist,
- das mittels des Lageestimators (7) bereitgestellte Lageestimator-Ausgangssignal (9) als Regelkreis-Eingangssignal (11) an einem Regler (19) des Regelkreises (10) bereitgestellt wird,
- der Regler (19) auf Basis des bereitgestellten Regelkreis-Eingangssignals (11) und einem auf den Regler (19) zurückgeführten Rückführsignal (12), das von einem vorhergehenden, korrigierten Winkellagesignal (20) des Reglers (19) und der zweiten, sensorbasiert bereitgestellten Winkelgeschwindigkeitsinformation (5) des Rotors gebildet wird, betrieben wird,
- der Regler (19) oder der Regelkreis (10) als Regelkreis-Ausgangssignal (13) ein korrigiertes Winkellagesignal (20) des Rotors bereitstellt.

6. Verfahren nach Anspruch 5,
**dadurch gekennzeichnet, dass**
- die Rotorlagegebereinrichtung (3) einen Summierer (14) aufweist,
- das Regelkreis-Ausgangssignal (13) und die zweite, sensorbasiert bereitgestellte Winkelgeschwindigkeitsinformation (5) des Rotors an dem Summierer (14) bereitgestellt werden,
- der Summierer (14) das Regelkreis-Ausgangssignal (13) und die zweite, sensorbasiert bereitgestellte Winkelgeschwindigkeitsinformation (5) des Rotors summiert und als Rotorlagegebereinrichtung-Ausgangssignal (15) ein Winkellagesignal (6) des Rotors bereitstellt.

7. Verfahren nach einem der vorhergehenden Ansprüche,
**dadurch gekennzeichnet, dass**
- die erste, sensorlos bereitgestellte Winkellageinformation (4) des Rotors von einem Spannungs-Signal (4a) der zumindest einen Statorwicklung und/oder einem Stromsignal (4b) der zumindest einen Statorwicklung gebildet wird oder ein Spannungs-Signal (4a) der zumindest einen Statorwicklung und/oder ein Stromsignal (4b) der zumindest einen Statorwicklung aufweist.

8. Verfahren nach einem der vorhergehenden Ansprüche,
**dadurch gekennzeichnet, dass**
- die zweite, sensorbasiert bereitgestellte Winkelgeschwindigkeitsinformation (5) des Rotors von zumindest einem Drehgeschwindigkeits-Signal (21) des Rotors gebildet wird oder zumindest ein Drehgeschwindigkeits-Signal (21) des Rotors aufweist.

9. Verfahren nach einem der vorhergehenden Ansprüche,
**dadurch gekennzeichnet, dass**
- die Rotorlagegebereinrichtung (3) zumindest einen, in oder am Gleichstrommotor (2) angeordneten Sensor (16) zum Erfassen der Drehgeschwindigkeit des Rotors besitzt oder mit zumindest einem Sensor (16) zum Erfassen der Drehgeschwindigkeit des Rotors kommunizierend verbunden ist,
- der zumindest eine Sensor (16) ein die Drehgeschwindigkeit des Rotors repräsentierendes Drehgeschwindigkeits-Signal (21) an der Rotorlagegebereinrichtung (3) bereitstellt, das die zweite, sensorbasiert bereitgestellte Winkelgeschwindigkeitsinformation (5) des Rotors bildet.

10. Anordnung (17), die zur Ausführung des Verfahrens nach einem der vorhergehenden Ansprüche eingerichtet ist.

11. Anordnung (17) nach Anspruch 10,
**gekennzeichnet durch**
- einen bürstenlosen Gleichstrommotor (2), der einen Stator mit zumindest einer Statorwicklung und einen mit Permanentmagneten versehenen Rotor aufweist,
- eine Steuereinrichtung (18) zur Ansteuerung des Gleichstrommotors (2),
- eine mit der Steuereinrichtung (18) kommunizierend verbundene Rotorlagegebereinrichtung (3), die zur Ausführung des Verfahrens nach einem der vorhergehenden Ansprüche eingerichtet und/oder einen Lageestimator (7) zum Ermitteln eines Winkellagenzwischensignals (22), einen dem Lageestimator (7) nachgeschalteten Regelkreis (10) mit einem Regler (19), einen dem Regelkreis (10) nachgeschalteten oder in den Regelkreis (10) integrierten Summierer (14) sowie zumindest einen, in oder am Gleichstrommotor (2) angeordneten Sensor (16) zum Erfassen einer Drehgeschwindigkeit des Rotors des Gleichstrommotors (2) aufweist.

12. Fahrzeug, insbesondere ein E-Bike oder ein Pedelec, das zur Ausführung des Verfahrens gemäß einem der Verfahrensansprüche 1 bis 9 eingerichtet ist und/oder das eine zur Ausführung des Verfahrens gemäß einem der Verfahrensansprüche 1 bis 9 eingerichtete Anordnung (17) gemäß einem der vorhergehenden Vorrichtungsansprüche 10 oder 11 aufweist.
